# EUROPEAN PATENT APPLICATION

(11) **EP 2 713 204 A1**
(43) Date of publication of application: **02.04.2014**
(21) Application number: 13185939.9
(22) Date of filing: 25.09.2013
(51) Int. Cl.: G02F 1/157, G02F 1/1335

(54) **Electrochromic color filter substrate, method of fabricating the same, and LCD panel comprising the same**

(30) Priority: 26.09.2012 CN 201210364722
(71) Applicant: Boe Technology Group Co. Ltd., Beijing 100015 (CN)
(72) Inventor: Gu, Xin, 100176 Beijing (CN); You, Jaegeon, 100176 Beijing (CN)
(74) Representative: Brötz, Helmut

(57) **Abstract**

The embodiments of the present invention provide a color filter substrate (1)which comprises a first glass substrate (111), a first transparent electrode layer (121), a color filter (14), a black matrix (13), a second transparent electrode layer (122), a second glass substrate (112); wherein the color filter (14) is made of electrochromic materials. The embodiments of the present invention further provide a LCD panel having the color filter substrate, and a method of making the color filter substrate.

## Description

### Technical field

The embodiments of the present invention relate to a color filter substrate, a method of fabricating the same, and a LCD panel.

### Background of the invention

With continuous progress of science and technology in recent years, as well as continuous improvement of LCD (Liquid Crystal Display) technology, LCD products have come into our life, and more and more LCD transparent displays are available in the market. And LCD displays with better display quality are desired. However, brightness of the LCD panel directly affects on the display quality of the LCD transparent display; therefore, the transparency of the LCD panel has become a concern of people.

Conventional LCD panel mainly comprises an array substrate and a color filter substrate which are cell-assembled, and a liquid crystal molecular layer disposed between the array substrate and the color filter substrate. The transparency of the transparent LCD display depends on transmittance of the color filter of the color filter substrate to a large extent. Conventional color filter of the color filter substrate is made of resin, and the optical transmittance of resin is within a range of 20% to 30%, thereby the transparency of the transparent LCD display is low due to the relative low optical transmittance of resin.

### Summary of the invention

In view of the above problem, embodiments of the present invention provide a color filter substrate, a method of fabricating the same, and a LCD panel having the color filter substrate, in order for improving transmittance of the color filter of the color filter substrate.

The embodiments of the present invention provide the following technical solution for solving the above problem:
A color filter substrate comprises a first glass substrate, a first transparent electrode layer, a color filter, a black matrix, a second transparent electrode layer, a second glass substrate; wherein the color filter is made of electrochromic material.

In the color filter substrate, the first and second glass substrates are disposed to be parallel and opposite to each other, the first transparent electrode layer is disposed on the first glass substrate. The second transparent electrode layer is disposed on the second glass substrate, and is disposed to be opposite to the first transparent electrode layer, and the color filter and the black matrix are disposed alternatively on the second transparent electrode layer.

For example, the color filter may comprise a red pixel region, a green pixel region and a blue pixel region; all these pixel regions can be made of electrochromic materials which are capable of changing to corresponding colors respectively. After the first and second transparent electrode layers are powered on, a color in each pixel region made respectively of electrochromic materials which are capable of changing to corresponding colors changes from being transparent to a corresponding color.

For example, when the first and second transparent electrode layers are not powered on, each pixel region made of electrochromic materials is transparent, the color filter has the maximum transmittance. After the first and second transparent electrode layers are powered on, the electrochromic material in each pixel region changes from being transparent to the corresponding color which continuously deepens along with increasing the magnitude of the electric field between the first and second transparent electrode layers, and transmittance of the color filter gradually decreases from its maximum transmittance to its minimum transmittance.

For example, the transmittance of the color filter varies within a range of 80% to 5%.

For example, the electrochromic materials may be any one of Viologen materials, Polythiophene materials and Polyaniline materials.

For example, the first and second transparent electrode layers have a thickness within a range of 40 nm to 200 nm.

For example, the black matrix has a thickness within a range of 5µm to 15 µm, an interval between two adjacent opening regions in the black matrix is within a range of 10 µm to 15 µm, and a width of the opening regions in the black matrix is within a range of 50 µm to 100 µm.

For example, thickness of the color filter is the same as thickness of the black matrix layer.

The embodiments of the present invention also provide a LCD panel, which comprises an array substrate and a color filter substrate which are cell-assembled wherein the first and second transparent electrode layers are disposed opposite to each other, and a liquid crystal molecular layer disposed between the array substrate and the color filter substrate; the color filter substrate being the color filter substrate mentioned in the above technical solution, and the second glass substrate of the color filter substrate disposed closer to the liquid crystal molecular layer than the first glass substrate of the color filter substrate.

The embodiments of the present invention further provide a method of fabricating the color filter substrate, comprising the steps of:
sputtering a first transparent electrode layer on a first glass substrate, sputtering a second transparent electrode layer on a second glass substrate;
depositing a black matrix on the second transparent electrode layer, and patterning the black matrix by etching;
forming a color filter by depositing or applying the electrochromic materials in opening regions of the black matrix;
cell-assembling the first and second glass substrates, wherein the first and second transparent electrodes disposed opposite to each other.

For example, the step of forming a color filter by depositing or applying the electrochromic materials in the opening regions of the black matrix comprises:
forming the color filter by vacuum evaporation in a situation that the electrochromic materials being Viologen small molecular materials. or
forming the color filter by etching in a situation that the electrochromic materials being Polythiophene or Polyaniline polymer materials.

The embodiments of the present invention provide a color filter substrate comprising a first glass substrate, a first transparent electrode layer, a color filter, a black matrix, a second transparent electrode layer and a second glass substrate; wherein, the color filter comprises a red pixel region, a green pixel region and a blue pixel region, and all these pixel regions are made of electrochromic materials which are capable of changing to corresponding colors, respectively.

In the color filter substrate, the first and second glass substrates are disposed parallel and opposite to each other, the first transparent electrode layer is disposed on the first glass substrate. The second transparent electrode layer is disposed on the second glass substrate and opposite to the first transparent electrode layer, the color filter and the black matrix are disposed alternatively on the second transparent electrode layer.

In a LCD panel comprising the color filter substrate provided by the embodiments of the present invention, when the first and second transparent electrode layers are not powered on, the pixel regions are transparent and the color filter has the maximum transmittance; and after the first and second transparent electrode layers are powered on, the pixel regions change from being transparent to corresponding colors which continuously deepen along with increasing the magnitude of the electric field between the first and second transparent electrode layers, and the transmittance of the color filter gradually decreases from its maximum transmittance to its minimum transmittance during this process.

When the pixel regions made of electrochromic materials are transparent, the transmittance of the color filter comprising these pixel regions is greater than the maximum transmittance of the color filter made of resin. Therefore, when the transmittance of the color filter of the color filter substrate is greater than the maximum transmittance of the color filter made of resin, a LCD panel comprising the color filter substrate provided by the embodiments of the present invention can increase the transmittance of the color filter of the color filter substrate, thereby improving transparency of the LCD panel.

The embodiments of the present invention provides a LCD panel, which comprises an array substrate and a color filter substrate which are cell-assembled and wherein the second glass substrate of the color filter substrate disposed closer to the liquid crystal molecular layer than the first glass substrate of the color filter substrate, and a liquid crystal molecular layer disposed between the array substrate and the color filter substrate which is the one provided in the above technical solution. When the transmittance of the color filter of the color filter substrate is greater than the maximum transmittance of the color filter made of resin, the transparency of the LCD panel is improved; thereby the transparency of the LCD panel provided by the embodiments of the present invention is higher.

The embodiments of the present invention further provide a method of fabricating a color filter substrate, which comprises the steps of:
sputtering a first transparent electrode layer on a first glass substrate, sputtering a second transparent electrode layer on a second glass substrate;
depositing a black matrix layer on the second transparent electrode layer, and patterning the black matrix layer by etching;
depositing or applying electrochromic materials in opening regions of the black matrix layer to form a color filter;
cell-assembling the first and second glass substrates, wherein the first and second transparent electrode layers are disposed opposite to each other.

In the color filter substrate made by the method provided by the embodiments of the present invention, the color filter comprises a plurality of pixel regions, and each of the pixel regions is made of electrochromic materials; when the first and second transparent electrode layers are not powered on, each of the pixel regions is transparent, and the color filter has the maximum transmittance; and after the first and second transparent electrode layers are powered on, each of the pixel regions changes from being transparent to a corresponding color which continuously deepens along with increasing the magnitude of the electric field between the first and second transparent electrode layers, and the transmittance of the color filter gradually decreases from the maximum transmittance to the minimum transmittance during this process; when the transmittance of the color filter is greater than the maximum transmittance of the color filter made of resin, the transparency of the LCD panel can be improved.

### Brirf description of the drawings

In order to clearly illustrate the technical solution of the embodiments of the invention, the drawings of the embodiments will be briefly described in the following; it is obvious that the described drawings are only related to some embodiments of the invention and thus are not limitative of the invention.
Fig.1 illustrates a structural schematic diagram of a LCD panel according to one embodiment of the present invention;
Fig.2 illustrates a diagram of one color state of a color filter after the first and second transparent electrode layer being powered on according to one embodiment of the present invention;
Fig.3 illustrates a diagram of another color state of a color filter after the first and second transparent electrode layers being powered on according to one embodiment of the present invention;
Fig.4 illustrates a structural schematic diagram of a black matrix according to one embodiment of the present invention;

### Detailed description

In order to make objects, technical details and advantages of the embodiments of the invention apparent, the technical solutions of the embodiment will be described in a clearly and fully understandable way in connection with the drawings related to the embodiments of the invention. It is obvious that the described embodiments are just a part but not all of the embodiments of the invention. Based on the described embodiments herein, those skilled in the art can obtain other embodiment(s), without any inventive work, which should be within the scope of the invention.

### Embodiment 1

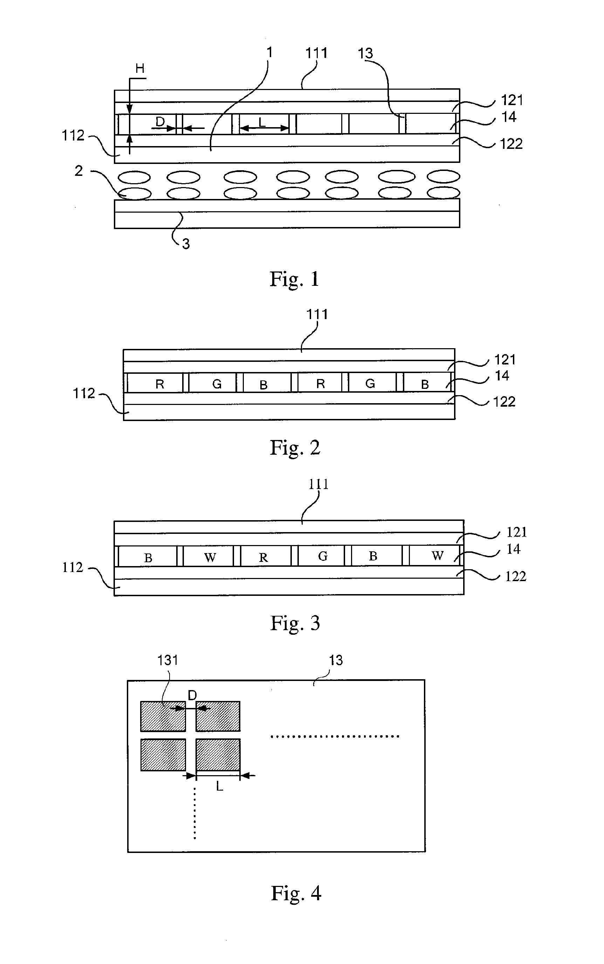

As shown in Fig.1, the first embodiment of the present invention provides a color filter substrate 1, comprising: a first glass substrate 111, a first transparent electrode layer 121, a color filter 14, a black matrix 13, a second transparent electrode layer 122 and a second glass substrate 112, wherein the color filter 14 is made of electrochromic materials.

The color filter 14 comprises a plurality of pixel regions, and all these pixel regions are made of electrochromic materials. For example, the color filter 14 may comprise a red pixel region, a green pixel region and a blue pixel region. The red pixel region is made of electrochromic materials which are capable of changing to red, the green pixel region is made of electrochromic materials which are capable of changing to green, and the blue pixel region is made of electrochromic materials which are capable of changing to blue.

The color filter 14 may further comprise a white pixel region, which is formed of transparent resin, as shown in Figure 3.

With regarding to a LCD panel comprising the color filter substrate 1 provided by the embodiments of the present invention, when the first and second transparent electrode layers 121, 122 are not powered on, the electrochromic materials of the color filter 14 are transparent, the color filter 14 has the maximum transmittance; and after the first and second transparent electrode layers 121, 122 are powered on, each of the pixel regions of the color filter 14 changes from being transparent to its corresponding color which gradually deepenes along with increasing the magnitude of the electric field between the first and second transparent electrode layers 121, 122, and the transmittance of the color filter 14 gradually decreases from its maximum transmittance to its minimum transmittance during this process.

When the color filter 14 made of electrochromic materials is transparent, it has the maximum transmittance which is greater than the maximum transmittance of a color filter made of resin; therefore, concerning the LCD panel comprising the color filter substrate 1 provided by the embodiments of the present invention, when the transmittance of the color filter 14 of the color filter substrate 1 is greater than the maximum transmittance of a color filter made of resin, the transmittance of the color filter 14 in the color filter substrate 1 is increased, thereby the transparency of the LCD panel being improved.

In the above technical solution, after the first and second transparent electrode layers 121, 122 are powered on, each of the pixel regions of the color filter 14 changes from being transparent to its corresponding color respectively.

As shown in Fig.2, the color filter mentioned in the above technical solution may comprise a red pixel region, a green pixel region and a blue pixel region. Each pixel region is made of electrochromic materials.

As shown in Fig.3, the color filter mentioned in the above technical solution may comprise a red pixel region, a green pixel region, a blue pixel region and a white pixel region. Each of the red, green and blue pixel regions are made of electrochromic materials, and the white pixel region is made of transparent resin.

In the above technical solution, when the first and second transparent electrode layers 121, 122 are not powered on, each pixel region of the color filter 14 is transparent, and the color filter 14 has the maximum transmittance; and after the first and second transparent electrode layers 121, 122 are powered on, the transmittance of the color filter 14 gradually decreases from its maximum transmittance to its minimum transmittance along with increasing the magnitude of the electric field between the first and second transparent electrode layers 121, 122.

Furthermore, the transmittance of the above color filter 14 is within a range of 80% to 5%.

Taking the maximum transmittance of 80% and the minimum transmittance of 5% of the color filter 14 for example, the transmittance of the color filter 14 may be 80%, 75%, 70%, 65%, 60%, 55%, 50%, 45%, 40%, 35%, 30%, 25%, 20%, 15%, 10% and 5% etc. Of course, the transmittance of the color filter layer 14 may also be other numerical values.

In one embodiment of the present invention, the electrochromic materials of the color filter 14 are any one of Viologen materials, Polythiophene materials or Polyaniline materials. Viologen materials are small molecular materials, and Polythiophene and Polyaniline materials are polymer materials, the transmittances of these materials may vary within a range of 80% to 5%. There are red electrochromic materials, green electrochromic materials and blue electrochromic materials in the Viologen materials, the Polythiophene materials or the Polyaniline materials.

The transmittances of most of electrochromic materials may vary within a range of 80% to 5%, but some electrochromic materials have the maximum transmittance greater than 80% and the minimum transmittance less than 5%.

In one embodiment of the present invention, the first and second transparent electrode layers 121, 122 have a thickness within a range of 40 nm to 200 nm. For example, the first and second transparent electrode layers 121, 122 may have a thickness of 40 nm, 60 nm, 80 nm, 100 nm, 120 nm, 150 nm, 180 nm or 200 nm. Of course, other thickness within the range of 40 to 200 nm may also be selected as a thickness of the first and second transparent electrode layers 121, 122.

In one embodiment of the present invention, as shown in Figs.1 and 4, the black matrix 13 has a thickness H within a range of 5 µm to 15 µm, an interval D between two adjacent opening regions 131 in the black matrix is within a range of 10 cm to 15 µm, and a width L of the opening regions 131 in the black matrix is within a range of 50 µm to 100 µm.

In one embodiment of the present invention, the thickness H of the color filter 14 is the same as the thickness H of the black matrix 13.

### Embodiment 2

On the basis of the above Embodiment 1 and its implementing manner, Embodiment 2 provides a LCD panel, as shown in Fig.1 The LCD panel comprises an array substrate 3 and a color filter substrate 1 which are cell-assembled, and a liquid crystal molecular layer 2 between the array substrate 3 and the color filter substrate 1, and the second glass substrate 112 of the color filter substrate 1 disposed closer to the liquid crystal molecular layer 2 than the first glass substrate 111 of the color filter substrate 1. When the first and second transparent electrode layers 121, 122 are not powered on, each pixel region in the color filter 14 is transparent, and the color filter 14 has the maximum transmittance; and after the first and second transparent electrode layers 121, 122 are powered on, each of the pixel regions in the color filter 14 is changes from being transparent to a corresponding color which gradually deepens along with increasing the magnitude of the electric field between the first and second transparent electrode layers 121, 122, and the transmittance of the color filter 14 gradually decreases from its maximum transmittance to its minimum transmittance during this process; when the transmittance of the color filter 14 in the color filter substrate 1 is greater than the maximum transmittance of a color filter made of resin, the transmittance of the color filter 14 is increased, thereby the transparency of the LCD panel being improved.

When each of the pixel regions in the color filter 14 is transparent, the maximum transmittance of the color filter 14 is greater than the maximum transmittance of a color filter made of resin; therefore, when the transmittance of the color filter layer 14 in the color filter substrate 1 is greater than the maximum transmittance of a color filter layer made of resin, the transparency of the LCD panel provided by the embodiment of the present invention is higher.

### Embodiment 3

The embodiment 3 provides a method of fabricating the color filter substrate 1, comprising the steps of:
Step S301: sputtering a first transparent electrode layer 121 on a first glass substrate 111;
Step S302: sputtering a second transparent electrode layer 122 on a second glass substrate 112;
Step S303: depositing a black matrix 13 on the second transparent electrode layer 122, and patterning the black matrix by etching;
Step S304: forming a color filter 14 by depositing or applying electrochromic materials in opening regions of the black matrix;
Step S305: cell-assembling the first and second glass substrates 111, 112, wherein the first transparent electrode layer 121 and the second glass substrate 122 are disposed opposite to each other.

In the color filter substrate 1 made by the method provided by the embodiment of the present invention, when the first and second transparent electrode layers 121, 122 are not powered on, each of the pixel regions in the color filter 14 is transparent, and the color filter 14 has the maximum transmittance; and after the first and second transparent electrode layers 121, 122 are powered on, each of the pixel regions in the color filter 14 changes from being transparent to a corresponding color which deepens along with increasing of the electric intensity between the first and second transparent electrode layers 121, 122, and the transmittance of the color filter 14 gradually decreases from its maximum transmittance to its minimum transmittance during this process.

When each of the pixel regions in the color filter 14 is transparent, the transmittance of the color filter 14 is greater than the maximum transmittance of a color filter made of resin; therefore, when the transmittance of the color filter 14 in the color film substrate 1 is greater than the maximum transmittance of a color filter layer made of resin, the transmittance of the color filter 14 in the color filter substrate 1 is improved.

For example, in Step S304: the color filter is formed by the vacuum evaporation when the electrochromic materials are Viologen small molecular materials; and the color filter layer 14 is formed in the black matrix's open regions by etching when the electrochromic materials are Polythiophene or Polyaniline polymer materials. The vacuum evaporation is evaporating or subliming a material for forming a film in the vacuum, in the process the material is deposited on the surface of the workpiece or substrate. As for small molecular materials, with a mask, the red electrochromic materials, the green electrochromic materials and the blue electrochromic materials, corresponding to the red pixel region, the green pixel region and the blue pixel region, are evaporated respectively into the opening regions 131, so as to form the color filter 14. For example, firstly, the mask is used for shielding areas corresponding to the black matrix region, the green pixel region and the blue pixel region, and the red electrochromic materials are evaporated in vacuum into the openings to form a red pixel region; and then the mask is used for shielding areas corresponding to the black matrix region, the red pixel region and the blue pixel region, and the green electrochromic materials are evaporated in vacuum into the openings to form a green pixel region; thereafter, the mask is used for shielding areas corresponding to the black matrix region, the red pixel region and the green pixel region, and the blue electrochromic materials are evaporated in vacuum into the openings to form a blue pixel region. Of course, it may also adopt other sequences of forming these pixel regions, which is not limited herein.

As for polymer materials, firstly, a layer of red electrochromic materials is formed in the opening regions 131 and the black matrix 13, thereafter a layer of photoresist is coated, and a mask is used for shielding areas corresponding to the red pixel region, then the exposure, developing, etching and stripping are performed to form the red pixel region; and then a layer of green electrochromic materials is formed in the regions excluding the red pixel region in the open regions 131, and then a layer of photoresist is coated, and a mask is used for shielding areas corresponding to the red pixel region and the green pixel region, then the exposure, developing, etching and stripping are performed to form the green pixel region accordingly; and then a layer of blue electrochromic materials is formed on the regions excluding the red pixel region and the green pixel region in the open regions 131 and the black matrix region 13, and then a layer of photoresist is coated, and a mask plate is used for shielding areas corresponding to the red pixel region, the green pixel region and the blue pixel region, then the exposure, developing, etching and stripping are performed to form the blue pixel region. By adopting such a method, the color filter 14 can be formed. It is understood that the red pixel region, the green pixel region and the blue pixel region can be formed in other sequences, so as to form the color filter 14.

The foregoing are merely exemplary embodiments of the invention, but are not used to limit the protection scope of the invention. The protection scope of the invention shall be defined by the attached claims.

## Claims

1. A color filter substrate comprising: a first glass substrate, a first transparent electrode layer, a color filter, a black matrix, a second transparent electrode layer, a second glass substrate, wherein said color filter is made of electrochromic materials.

2. The color filter substrate according to claim 1, wherein the color filter comprises a red pixel region, a green pixel region and a blue pixel region; all the pixel regions are made of electrochromic materials which are capable of changing to corresponding colors respectively, and all the pixel regions changes from being transparent to corresponding colors respectively subject to an electric field between the first transparent electrode layer and the second transparent electrode layer.

3. The color filter substrate according to claim 2, wherein the color filter further comprises a white pixel region.

4. The color filter substrate according to claim 2 or 3, wherein in a situation that the first and second transparent electrode layers are not powered on, the pixel regions of said color filter is transparent, the color filter has a maximum transmittance; and after the first and second transparent electrode layers are powered on, transmittance of the color filter gradually decreases from its maximum transmittance to its minimum transmittance.

5. The color filter substrate according to any one of claims 1 to 4, wherein the color filter has a transmittance within a range of 80% to 5%.

6. The color filter substrate according to any one of claims 1 to 5, wherein the first and second glass substrates are disposed parallel and opposite to each other; the first transparent electrode layer is disposed on the first glass substrate; the second transparent electrode layer is disposed on the second glass substrate and opposite to the first transparent electrode layer; and the color filter and the black matrix are disposed alternatively on the second transparent electrode layer.

7. The color filter substrate according to any one of claims 1 to 6, wherein said electrochromic materials are Viologen materials, Polythiophene materials or Polyaniline materials.

8. The color filter substrate according to any one of claims 1 to 7, wherein the first and second transparent electrode layers have a thickness within a range of 40 nm to 200 nm.

9. The color filter substrate according to any one of claims 1 to 8, wherein the black matrix has a thickness within a range of 5 µm to 15 µm, an interval between two adjacent opening regions in the black matrix is within a range of 10 µm to 15 µm, and a width of the opening regions in the black matrix is within a range of 50 µm to 100 µm.

10. The color filter substrate according to any one of claims 1 to 9, wherein a thickness of the color filter is the same as a thickness of said black matrix.

11. A LCD panel comprising: an array substrate and a color filter substrate which are cell-assembled, and a liquid crystal molecular layer disposed between the array substrate and a color filter substrate, wherein the color filter substrate is the color filter substrate as defined in any one of claims 1 to 10, and the second glass substrate of the color filter substrate disposed closer to said liquid crystal molecular layer than the first glass substrate of the color filter substrate.

12. A method of fabricating a color filter substrate, comprising steps of:
sputtering a first transparent electrode layer on a first glass substrate, sputtering a second transparent electrode layer on a second glass substrate;
depositing a black matrix layer on the second transparent electrode layer, and patterning the black matrix by etching;
depositing or applying electrochromic materials in a black matrix's opening regions of the black matrix to form a pixel region of a color filter, and forming the color filter;
cell-assembling the first and second glass substrates, wherein the first and second transparent electrode layers are disposed to be opposed to each other, so as to form the color film substrate.

13. The method according to claim 12, wherein said depositing or applying the electrochromic materials in the black matrix's opening regions comprises: forming the pixel region of the color filter layer by a vacuum evaporation method under a situation that said electrochromic materials are Viologen small molecular materials.

14. The method according to claim 12, wherein said step of depositing or applying the electrochromic materials in the black matrix's open regions comprises: forming the pixel region of the color filter layer by etching under a situation that said electrochromic materials are Polythiophene or Polyaniline polymer materials.
